# EUROPEAN PATENT APPLICATION

(11) **EP 0 707 932 A2**
(43) Date of publication of application: **24.04.1996**
(21) Application number: 95202752.2
(22) Date of filing: 12.10.1995
(51) Int. Cl.: B29B 17/00, B30B 9/30

(54) **Empty plastic bottle compactor**

(30) Priority: 19.10.1994 IT MI942133
(71) Applicant: Dr. Aita & Associated Inspectors Italia S.a.s., I-95125 Catania CT (IT); Cutolo, Gianfranco, I-95100 Catania CT (IT); Leonardi, Eugenio, I-95100 Catania CT (IT); Verdirame, Carmelo, I-95030 S.Agata li Battiati CT (IT)
(72) Inventor: Aita, Salvatore, I-95125 Catania, CT (IT); Cutolo, Gianfranco, I-95100 Catania, CT (IT); Leonardi, Eugenio, I-95100 Catania, CT (IT); Verdirame, CArmelo, I-95030 S. Agata Li Battiati, CT (IT)
(74) Representative: Arena, Giovanni

(57) **Abstract**

The compactor comprises:
- a housing provided with closing door and designed to receive an empty bottle,
- a device for heating a base zone of the housing designed to receive the bottle base,
- a bottle compression device designed to compress the bottle within the above mentioned base zone and capable of assuming an initial position of preparation for compression and a final position of completed compacting, and
- compression device operating means designed to control movement in both directions and in particular positioning thereof in the initial position and then beginning of a compression cycle after bottle input and closing of the door and finally to control return from the final position to the initial position to begin a new compacting cycle.

## Description

The present invention relates to an empty plastic-bottle compactor especially suited for domestic use.

At present, plastic bottles of common use (for containing water, beverages, etc.) once emptied become cumbersome refuse creating problems of space both in places of formation of refuse and in places of collection and delivery.

Compacting equipment operating by compression only which however is suited to the compacting of empty tin cans but not to the compacting of plastic bottles because of the limited volume reduction achievable in the latter case is known. Indeed, the plastic bottle, once the compression force is removed, again acquires its original form because of its elasticity.

The purpose of the present invention is to make available a reliable, economical and small plastic-bottle compactor which would ensure drastic, permanent reduction of the space occupied by the refuse material, which in this manner would create less zone problems in places of formation and be easily treated in disposal cycle phases to facilitate as well possible differentiated collection with resulting possibility of reuse of the recovered plastic.

For this purpose the empty plastic bottle compactor in accordance with the present invention comprises:
- a housing provided with closing door and designed to receive an empty bottle,
- a device for heating a base zone of the housing designed to receive the bottle base,
- a bottle compression device designed to compress the bottle within the above mentioned base zone and capable of assuming an initial position of preparation for compression and a final position of completed compacting, and
- compression device operating means designed to control movement in both directions and in particular positioning thereof in the initial position and then beginning of a compression cycle after bottle input and closing of the door and to control finally return from the final position to the initial position to begin a new compacting cycle.

The characteristics and advantages of the method in accordance with the present invention are set forth in the description of an embodiment thereof given below by way of non-limiting example with reference to the annexed drawings.

In the drawings:
- FIG.1: shows a vertical cross section view of the compactor,
- FIG.2: shows a top and partially internal view of the compactor of FIG. 1, and
- FIG.3: shows a horizontal cross section view of the compactor of FIG.1 along plane of cut A-A of that figure.

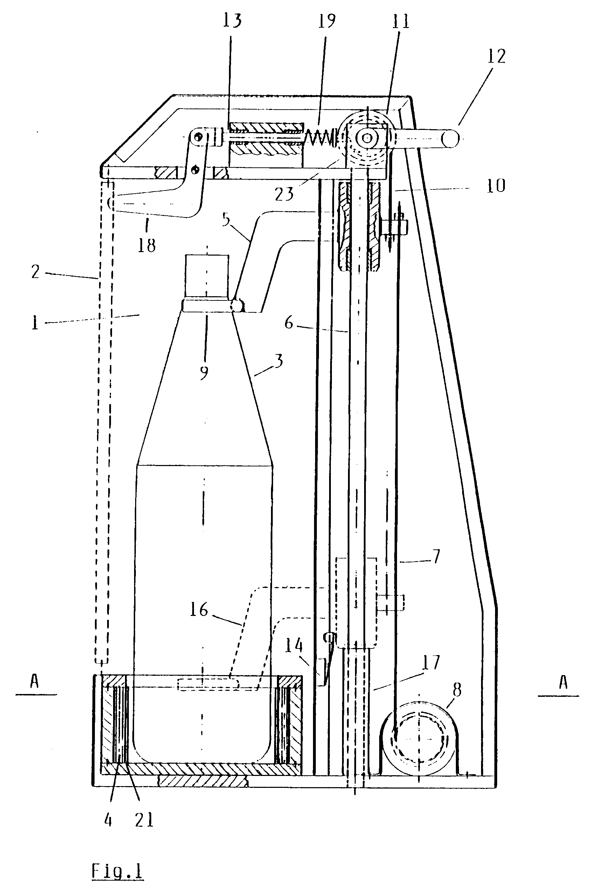

With reference to FIGS. 1, 2 and 3 the compactor in accordance with the present invention comprises:
- a housing chamber 1 designed to receive an empty bottle 3 and provided with a door 2,
- a device 4 for heating a zone (hereinafter termed 'base zone') of the chamber 1 designed to receive the bottle base and operating electrically (with power input of a few hundred watts) and consisting of a resistor wound along the cylindrical surface surrounding said base zone,
- a bottle compression device consisting of a cursor 5 running along a rod 6 and on which a steel wire 7 exerts a direct downward force due to the action of a flat coil spring contained in a housing 8 with said cursor compressing the bottle towards the base zone through an end 9 thereof formed like a fork and with an opening between the two tines of the fork wider than the diameter of the bottle neck so as to be able to engage the bottle at the base of the neck,
- a means of operating the above mentioned compression device comprising a wire 10 for tensioning the coil spring winding itself on a pulley 11 keyed on a shaft 22 which can be rotated in the winding direction of the wire 10 on the pulley 11 by means of the crank 12 and whose return movement (i.e. in the unwinding direction of the wire 10 from the pulley) is normally prevented by a gear and ratchet 23 (with saw teeth) and a stop ratchet 13, and
- a means of starting or stopping power input to the heating device 4 and consisting of a microswitch 14.

Operation of the compactor can be described as follows.

When at rest, the cursor 5, which can run on the rod 6 by means of the shoe 15, is in the lower stop position 16 (indicated in broken lines in FIG. 1) with the shoe 15 pressed by the coil spring against the stop 17 (consisting of a sleeve fitted on the lower end of the rod 6). In this position the shoe 15 also presses laterally against the microswitch 14 which therefore keeps the resistor power input circuit broken.

To prepare the equipment for compacting of a bottle it is necessary first to open the door so as to free the stop ratchet 13 from the action of the lever 18 and allow it to press against the gear upon stressing by the spring 19 (indeed, with the door closed the lever 18, due to the action of the door, keeps the ratchet disengaged from the gear). Then by operating the crank 12 it is necessary to raise the cursor 5 to its upper stop position where, once reached, it remains due to the effect of the gear and ratchet.

At the beginning of the upward return movement the shoe 15 disengages the microswitch 14, which therefore closes the resistor power supply circuit to start heating the base zone of the housing.

With the cursor hooked in its top stop position, the empty bottle 3 is placed in the housing chamber 1 in such a manner that the neck can be engaged by the fork 9.

The door 2 is subsequently tightened in closing position bringing about:
- operation of the lever 18 and the resulting disengagement of the ratchet 13 from the gear,
- release of the shaft 22 from the gear and ratchet mechanism so as to be free to rotate in both directions,
- movement of the cursor 5 which, no longer constrained by the wire 10 (which is now free to unwind from the pulley 11), lowers due the traction effect exerted by the wire 7, and moves to compress the bottle downward by pressing on the base of its neck.

Due to the compression effect exerted by the cursor and the heat developed in the base zone, the bottle, which is usually of thermoplastic material, curls up progressively within this zone until the cursor (in a few tens of seconds) moves into its lower stop position. In this position the shoe again engages the microswitch to cause breaking of the resistor power supply circuit and the end of the compacting cycle.

If it is then desired to proceed to compact another bottle it is necessary to again open the door, return the cursor to its top stop position, remove the compacted bottle, and insert the next bottle to start the compacting cycle again.

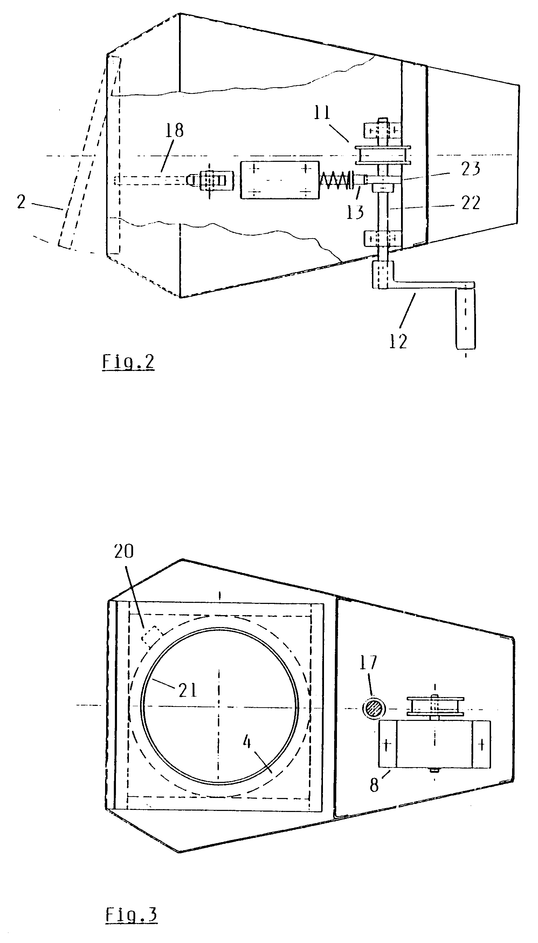

To prevent overheating of the base zone, which could cause melting of the plastic material and harmful fumes, the temperature in the base zone is held below approximately 90°C by means of a thermostat 20 (see FIG. 3) located near the resistor. In addition, again to prevent melting of the plastic material, on the cylindrical surface of the base zone is provided a layer 21 of Teflon coating so that the heat is transferred to the plastic material of the bottle and in the base zone, not predominantly by contact but predominantly by air convection and radiation.

The above mentioned compactor is easy to use, can be mounted either on a table or on a wall, and is suited to use in different environments or premises (dwellings, public commercial concerns, etc.).

It is clear that numerous modifications, adaptations, variations and substitutions of elements by others functionally equivalent can be made to the embodiments described above by way of non-limiting example without thereby going beyond the scope of the invention.

One such variant might concern the positioning of the compactor which, instead of vertical, could be horizontal.

Another variant might involve the end 9 of the cursor, which might have another form e.g. that of a ring.

A last variant might concern the cursor raising system which, instead of manual (by crank), might be powered (by a small electric motor driving the shaft 22).

## Claims

1. Empty plastic-bottle compactor comprising:
- a housing provided with a closing door and designed to receive an empty bottle,
- a heating device for the base zone of the housing designed to receive the bottle base,
- a bottle compression device designed to compress the bottle within the above mentioned base zone and capable of assuming an initial compression preparation position and a final compacting position,
- compression device operating means designed to command movement in both directions and in particular positioning thereof in the initial position and then beginning of a compression cycle after input of a bottle and closing of the door, and finally to command return from the final position to the initial position to start another compacting cycle.

2. Compactor in accordance with claim 1 and characterized in that it comprises means of controlling the heating device power supply when the bottle is in the compression phase and breaking the power supply after compacting completion.

3. Compactor in accordance with claim 1 and characterized in that the base zone heating device operates electrically and consists of a resistor wound along the cylindrical surface surrounding said zone.

4. Compactor in accordance with claim 1 and characterized in that the bottle compression device comprises a cursor running along a rod on which a traction wire exerts a force directed toward the base zone due to the action of a recall spring with said cursor compressing the bottle toward the base zone by means of one of its ends.

5. Compactor in accordance with claim 4 and characterized in that the above mentioned cursor end is formed like a fork with a space between the two times of the fork of a width greater than the diameter of the bottle neck so as to be able to engage the base of the bottle.

6. Compactor in accordance with claim 4 and characterized in that the operating means of the compression device comprise a recall spring tensioning wire anchored on one side on the cursor and on the other side wound on a pulley keyed on a shaft which can be rotated in the direction of winding of the tensioning wire on the pulley by a motor means and whose return movement (i.e. in the unwinding direction of the tensioning wire from the pulley) with the door open is prevented by a gear and ratchet mechanism.

7. Compactor in accordance with claim 6 and characterized in that the above mentioned motor means is a crank.

8. Compactor in accordance with claim 6 and characterized in that the above mentioned gear and ratchet mechanism is the gear type with saw teeth and stop ratchet.

9. Compactor in accordance with claim 2 and characterized in that the means of starting and stopping the device heating power supply consist of a microswitch operated by the cursor and specifically switched to open condition when the cursor is in its final position and switched to closing condition when the cursor is removed from said position.

10. Compactor in accordance with claim 6 and characterized in that the above mentioned ratchet and gear mechanism is deactivated and activated by means of a lever operated by the door at the moment of its closing or opening respectively.

11. Compactor in accordance with claim 9 and characterized in that during heating of the base zone the temperature in said zone is held below 90°C by a thermostat located near the resistor.

12. Compactor in accordance with claim 11 and characterized in that on the cylindrical surface of the base zone there is a Teflon coating.
